# EUROPEAN PATENT SPECIFICATION

(11) **EP 3 244 303 B1**
(45) Date of publication and mention of the grant of the patent: **26.06.2024**
(21) Application number: 17170177.4
(22) Date of filing: 09.05.2017
(51) Int. Cl.: G06F 9/451

(54) **METHOD AND DEVICE FOR DISPLAYING AN APPLICATION INTERFACE**
VERFAHREN UND VORRICHTUNG ZUR ANZEIGE EINER ANWENDUNGSSCHNITTSTELLE
PROCÉDÉ ET DISPOSITIF D'AFFICHAGE D'UNE INTERFACE D'APPLICATION

(30) Priority: 09.05.2016 CN 201610304869
(43) Date of publication of application: 15.11.2017
(60) Divisional application: 20153244.7
(73) Proprietor: Beijing Xiaomi Mobile Software Co., Ltd., Beijing 100085 (CN)
(72) Inventor: WANG, Le, BEIJING, 100085 (CN); LI, Minghao, BEIJING, 100085 (CN); ZHOU, Peng, BEIJING, 100085 (CN)
(74) Representative: Cabinet Beau de Loménie

(56) References cited:
- US-A1- 2005 283 742
- US-A1- 2006 161 861
- US-A1- 2008 307 364
- US-A1- 2009 138 823
- US-A1- 2010 153 844
- US-A1- 2010 211 872
- US-A1- 2011 138 295
- US-A1- 2013 009 990

## Description

### TECHNICAL FIELD

The present invention relates to the field of computers, and more particularly, to a method and device for displaying an application interface.

### BACKGROUND

With development of a computer technology, applications may be installed in a terminal such as a mobile phone and a smart watch for realizing various functions. A user may need to install two identical applications in the terminal when using the terminal. In the prior art, when the terminal runs two identical applications at the same time (for example, the terminal runs two identical instant messaging applications respectively with two different user accounts), display interfaces for running the two identical applications are the same. For example, the user interfaces and icons of the two running applications are the same, as a result, it is very difficult for a user to know which application corresponds to which account unless he opens one of the applications to check content therein. This is cumbersome and time consuming for the user to use the concurrently running applications.

US2008/307364 relates to an icon receptacle along a depth aspect.

### SUMMARY

Accordingly, the present invention provides a method and device for displaying an application interface, in accordance with claims which follow.

According to a first aspect, the invention relates to a method for displaying an application interface, comprising: determining a first application, of which operating time is closest to current time, of an application multi-on group; and displaying application prompting information in a specific area in an interface of a terminal for indicating the first application of which the operating time is closest to the current time. Herein, the term "operating time of an application" refers to the time or moment at which the application is operated, for example, used by a user or run in the foreground.

In this document, the application multi-on group includes a plurality of identical applications and the plurality of identical applications run at the same time. The application multi-on group usually includes an original application and at least one mirror application which is obtained by copying the original application.

In the first aspect, the terminal determines the first application, of which the operating time is closest to the current time (for example, the first application is an application which is most recently used by a user, or most recently run in the foreground), of the application multi-on group and display the application prompting information in the specific area in the interface of the terminal for indicating the first application of which the operating time is closest to the current time to further accurately distinguish the first application from other applications of the application multi-on group, so that the display effect of displaying a plurality of identical applications of the application multi-on group is improved, thus enabling a user to easily and efficiently use the plurality of identical applications in the application multi-on group.

According to a particular embodiment, the application prompting information comprises a multi-on identifier or a multi-on icon of the application multi-on group.

According to a particular embodiment, displaying the application prompting information in the specific area in the interface of the terminal comprises: judging whether the first application of the application multi-on group is in a foreground running status or not; and displaying the application prompting information in a system status bar of the terminal when the first application of the application multi-on group is in the foreground running status.

According to a particular embodiment, displaying the application prompting information in the specific area in the interface of the terminal comprises: displaying a notification message, which is sent for the first application, in a system notification bar of the terminal, when the notification message is received; and displaying a multi-on icon of the first application at a position for displaying the notification message.

According to a particular embodiment not being part of this invention, displaying the application prompting information in the specific area in the interface of the terminal comprises: setting an icon of the first application in a taskbar of the terminal to be a multi-on icon, at least one icon being contained in the taskbar and the at least one icon being icons of applications currently in a running status.

According to a particular embodiment, before displaying the application prompting information in the specific area in the interface of the terminal, the method further comprises: acquiring an original icon of the first application; and adding a multi-on identifier of the application multi-on group at a specific position within the original icon to obtain a multi-on icon of the first application.

In an implementation example, the first application is a mirror application of the application multi-on group.

According to a second aspect, the invention relates to a device for displaying an application interface, comprising: a determination module configured to determine a first application, of which operating time is closest to current time, of an application multi-on group; and a display module configured to display application prompting information in a specific area in an interface of a terminal for indicating the first application of which the operating time is closest to the current time.

The advantages and technical effects of the device according to the invention correspond to those of the method presented above.

According to a particular embodiment, the application prompting information comprises a multi-on identifier or a multi-on icon of the application multi-on group.

According to a particular embodiment, the display module comprises: a judgment module configured to judge whether the first application of the application multi-on group is in a foreground running status or not; and a first display module configured to display the application prompting information in a system status bar of the terminal when the first application of the application multi-on group is in the foreground running status.

According to a particular embodiment, the display module comprises: a second display module configured to display a notification message, which is sent for the first application, in a system notification bar of the terminal, when the notification message is received; and a third display module configured to display a multi-on icon of the first application at a position for displaying the notification message.

According to a particular embodiment not being part of this invention, the display module comprises: a fourth display module configured to set an icon of the first application in a taskbar of the terminal to be a multi-on icon, at least one icon being contained in the taskbar and the at least one icon being icons of applications currently in a running status.

According to a particular embodiment, the device further comprises: an acquisition module configured to acquire an original icon of the first application; and an addition module configured to add a multi-on identifier of the application multi-on group at a specific position within the original icon to obtain a multi-on icon of the first application.

In an implementation example, the first application is a mirror application of the application multi-on group.

According to a third aspect, the invention relates to a device for displaying an application interface, comprising: a processor; and a memory configured to store instructions executable by the processor, wherein the processor is configured to: determine a first application, of which operating time is closest to current time, of an application multi-on group; and display application prompting information in a specific area in an interface of a terminal for indicating the first application of which the operating time is closest to the current time.

The advantages and features of the devices according to the embodiments of the present invention are the same with those of the above described method and will not be repeated here.

In one particular embodiment, the steps of the method for displaying an application interface are determined by computer program instructions.

Consequently, according to a fourth aspect, the invention is also directed to a computer program for executing the steps of a method for displaying an application interface as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

It is to be understood that the above general descriptions and detailed descriptions below are only exemplary and explanatory and not intended to limit the present invention.

### BRIEF DESCRIPTION OF THE DRAWINGS

The accompanying drawings, which are incorporated in and constitute a part of this specification, illustrate embodiments consistent with the present invention and, together with the specification, serve to explain the principles of the present invention.
Fig. 1 is a diagram illustrating a system architecture of a method for displaying an application interface according to an embodiment;
Fig. 2A is a flow chart illustrating another method for displaying an application interface according to an embodiment;
Fig. 2B is a schematic diagram illustrating a display interface of a terminal according to an exemplary embodiment not being part of this invention;
Fig. 2C is a schematic diagram illustrating a multi-on identifier according to an embodiment;
Fig. 2D is a schematic diagram illustrating another multi-on identifier according to an embodiment;
Fig. 2E is a schematic diagram illustrating another multi-on identifier according to an embodiment;
Fig. 2F is a schematic diagram illustrating an original icon according to an embodiment;
Fig. 2G is a schematic diagram illustrating a multi-on icon according to an embodiment;
Fig. 2H is a schematic diagram illustrating another multi-on icon according to an embodiment;
Fig. 2I is a schematic diagram illustrating another multi-on icon according to an embodiment;
Fig. 2J is a schematic diagram illustrating another multi-on icon according to an exemplary embodiment not being part of this invention;
Fig. 2K is a schematic diagram illustrating a display interface of a terminal according to an exemplary embodiment not being part of this invention;
Fig. 2L is a schematic diagram illustrating another display interface of a terminal according to an embodiment;
Fig. 2M is a schematic diagram illustrating another display interface of a terminal according to an embodiment;
Fig. 2N is a schematic diagram illustrating another display interface of a terminal according to an embodiment;
Fig. 3 is a block diagram illustrating a device for displaying an application interface according to an embodiment;
Fig. 4 is a block diagram illustrating another device for displaying an application interface according to an embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present invention. Instead, they are merely examples of devices and methods consistent with some aspects related to the present invention as recited in the appended claims.

Before the embodiments of the present invention is explained and described in detail, an application scenario of the embodiments of the present invention will be introduced at first. When using a terminal such as a mobile phone and a smart watch, a user may install two identical applications in the terminal to implement a double-on status of the same application. In the related technology, the terminal may run two identical applications at the same time, display interfaces for the two running identical applications are also the same, and it is difficult for the user to determine a currently displayed display interface belongs to which one of the two identical applications. Therefore, the embodiments of the present invention provide a method for displaying an application interface.

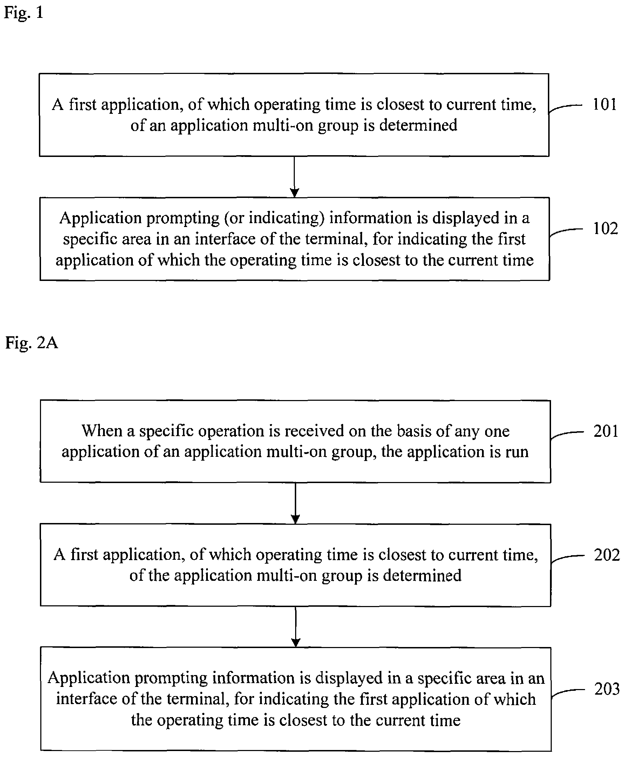

Fig. 1 is a flow chart illustrating a method for displaying an application interface according to an embodiment. Referring to Fig. 1, the method for displaying an application interface is applied to a terminal and includes the following steps.

In Step 101, a first application, of which operating time is closest to current time, of an application multi-on group is determined; and

In Step 102, application prompting (or indicating) information is displayed in a specific area in an interface of the terminal, for indicating the first application of which the operating time is closest to the current time.

In the embodiment of the present invention, the terminal determines the first application, of which the operating time is closest to the current time, of the application multi-on group and display the application prompting information in the specific area in the interface of the terminal for indicating the first application of which the operating time is closest to the current time, so as to accurately distinguish the first application from other applications of the application multi-on group, so that the display effect of displaying a plurality of identical applications of the application multi-on group is improved, thus enabling a user to easily and efficiently use the plurality of identical applications in the application multi-on group.

In another embodiment of the present invention, the application prompting information includes a multi-on identifier or a multi-on icon of the application multi-on group.

In another embodiment of the present invention, the step that the application prompting information is displayed in the specific area in the interface of the terminal includes:
whether the first application of the application multi-on group is in a foreground running status or not is judged; and
the application prompting information is displayed in a system status bar of the terminal when the first application of the application multi-on group is in the foreground running status.

In another embodiment of the present invention, the step that the application prompting information is displayed in the specific area in the interface of the terminal includes:
a notification message sent for the first application is displayed in a system notification bar of the terminal when the notification message is received; and
a multi-on icon of the first application is displayed at the position for displaying the notification message.

In another embodiment of the present invention, the step that the application prompting information is displayed in the specific area in the interface of the terminal includes:
an icon of the first application in a taskbar of the terminal is set to be the multi-on icon, wherein at least one icon is contained in the taskbar and the at least one icon includes icons of applications currently in a running status.

In another embodiment of the present invention, before the step that the application prompting information is displayed in the specific area in the interface of the terminal, the method further includes:
an original icon of the first application is acquired; and
the multi-on identifier of the application multi-on group is added at a specific position within the original icon to obtain the multi-on icon of the first application.

In another embodiment of the present invention, the first application is a mirror application of the application multi-on group.

All of the abovementioned optional technical solutions may be freely combined to form optional embodiments of the present invention, which will not be elaborated in the embodiments of the present invention one by one.

Fig. 2A is a flow chart illustrating a method for displaying an application interface according to an embodiment. Referring to Fig. 2A, the method for displaying an application interface is applied to a terminal and includes the following steps.

In Step 201, when a specific operation is received on the basis of (or performed on) any one application of an application multi-on group, the application is run.

Since a user may need to install a plurality of identical applications, including an original application and at least one mirror application, in the terminal to establish an application multi-on group when using the terminal. For example, the user may need to install a plurality of identical instant messaging applications in the terminal and configure the plurality of identical instant messaging applications for different social occasions (for example, work occasion, private social occasion, etc.) respectively. Thus, the terminal may run any one application of the application multi-on group after the application multi-on group is created.

The specific operation may be an operation such as a clicking operation and a swiping operation, etc., which will not be specifically limited in the embodiments of the present invention.

As mentioned above, it is to be noted that the application multi-on group includes a plurality of identical applications and the plurality of identical applications run at the same time. The application multi-on group usually includes an original application and at least one mirror application which is obtained by copying the original application.

Each application may have a unique application identifier for indicating identity information of the application. When the application is installed in the terminal, the application identifier of the application is required to be stored in a system file of the terminal to register the application. Thus, when it is necessary to install a mirror application identical to the application in the terminal, that is, the original application is copied, the application identifier of the mirror application may be modified, the modified application identifier is determined as an application identifier of the mirror application, and the application identifier of the mirror application is then stored in the system file of the terminal to register the mirror application so as to install the mirror application.

It is to be noted that a method for installing a plurality of identical applications in the terminal to further obtain an original application and at least one mirror application during a practical implementation is known in the prior, and will not be specifically limited in the embodiments of the present invention.

For example, three identical instant messaging applications "XX communication" are installed in the terminal to create an XX communication application multi-on group, and the XX communication application multi-on group includes the three identical XX communication applications, wherein one XX communication application is set to be an original application, and two XX communication applications are mirror applications.

Furthermore, since a plurality of types of applications may be installed in the terminal, for each type of application of the plurality of types of applications, a plurality of copies of the application may be installed in the terminal to create an application multi-on group for the application. That is, a plurality of application multi-on groups may be established in the terminal, each application multi-on group corresponding to a type of application.

After the terminal runs an application of an application multi-on group, for conveniently distinguishing a first application of the application multi-on group from other applications of the application multi-on group, the terminal may prompt the first application of the application multi-on group according to the following steps.

In Step 202, a first application, of which operating time is closest to current time, of the application multi-on group is determined.

Since the application multi-on group includes a plurality of identical applications and the terminal run identical display interfaces when running the plurality of applications, the first application of which the operating time is closest to the current time may be determined to conveniently distinguish the plurality of identical applications.

It is to be noted that the terminal may also perform the step of determining the first application of which the operating time is closest to the current time of the application multi-on group at other time. For example, in a possible implementation, the terminal performs the step of determining the first application of which the operating time is closest to the current time of the application multi-on group at a preset time interval. In another possible implementation, the terminal performs the step of determining the first application, of which the operating time is closest to the current time, of the application multi-on group when an instruction for distinguishing the applications is received. There are no specific limits made in the embodiments of the present invention.

The preset time interval may be set by the terminal before the first application, of which the operating time is closest to the current time, of the application multi-on group is determined. The preset time interval may be, for example, 5ms or 10ms. Of course, the preset time interval may also be another value in a practical implementation. There are no specific limits made in the embodiments of the present invention.

It is to be noted that the instruction for distinguishing the applications may be triggered when a user perform a preset operation which may be an operation such as a clicking operation, a swiping operation, and a shaking operation, etc., which will not be specifically limited in the embodiments of the present invention.

Furthermore, for the first application, there may be the following two possible situations.

In the first situation, the first application may be a mirror application of the application multi-on group.

In such a situation, when the application multi-on group includes one mirror application, the first application is the mirror application; and when the application multi-on group includes a plurality of mirror applications, the first application may be the mirror application which is operated at the latest in the plurality of mirror applications. Of course, the first application may also include the plurality of mirror applications, that is, all of the mirror applications of the application multi-on group are determined as the first application. For example, when the application multi-on group includes two mirror applications, the two mirror applications both may be determined as the first applications.

In the second situation, the first application may be a specified application of the application multi-on group.

Since the application multi-on group includes a plurality of identical applications which may be configured for different occasions respectively, and the user may need to determine whether or not the first application which is to be indicated is an application configured to a specific occasion (e.g. a work occasion, a private social occasion, etc.) without concerning about which application is an original application and which application is a mirror application, the specified application of the application multi-on group may be determined as the first application to improve accuracy of distinguishing the plurality of identical applications of the application multi-on group.

When the first application is a specified application of the application multi-on group, the terminal may display selection prompting information before determining the first application. The selection prompting information is configured to prompt the user to select an application from the application multi-on group. When a selection instruction is received on the basis of the application multi-on group, the terminal determines an application selected by the selection instruction as the first application.

It is to be noted that the terminal may display the selection prompting information in a manner of popup display, window display or the like, which will not be specifically limited in the embodiments of the present invention.

It is also to be noted that the selection instruction may be triggered when the user performs a preset operation.

For example, the XX communication application multi-on group includes the three identical XX communication applications, an XX communication application 1, an XX communication application 2 and an XX communication application 3. The XX communication application 1 is an original application, the XX communication application 2 and XX communication application 3 both are mirror applications, XX communication application 3 is a specified application. The first application is a specified application in this example. Thus, the terminal may determine that the first application is the XX communication application 3 and distinguish the XX communication application 3 from the other XX communication applications of the XX communication application multi-on group.

It is to be noted that there may also exist another possible situation for the first application in the practical implementation. For example, the first application may be an application, of which the installation time is closest to the current time, of the application multi-on group. There are no specific limits made in the embodiments of the present invention.

It is further to be noted that the application multi-on group may be any application multi-on group of a plurality of application multi-on groups created in the terminal. That is, for each group of the plurality of application multi-on groups, the terminal performs the step of determining the first application, of which the operating time is closest to the current time, of the application multi-on group.

In Step 203, application prompting information is displayed in a specific area in an interface of the terminal, for indicating the first application of which the operating time is closest to the current time.

Since the application multi-on group includes a plurality of identical applications and it is difficult for the user to distinguish the plurality of identical applications when display interfaces for the terminal to run the plurality of identical applications are identical, the application prompting information may be displayed in the specific area in the interface of the terminal to prompt the first application of which the operating time is closest to the current time after the first application of which the operating time is closest to the current time of the application multi-on group is determined.

The specific area may include any one, some, or all of a system status bar of the terminal, a system notification bar, and a display area containing an icon of any application of the application multi-on group. Of course, the specific area may also include another area such as a taskbar of the terminal in the practical implementation. There are no specific limits made in the embodiments of the present invention.

It is to be noted that the application prompting information includes a multi-on identifier or a multi-on icon of the application multi-on group.

In the example, the multi-on identifier may be an identifier such as a number, a letter, a special character, a graphic, and a picture, which will not be specifically limited in the embodiments of the present invention. The multi-on icon is a multi-on icon of the first application which may be obtained by adding the multi-on identifier in an original icon of the first application by the terminal.

It is to be noted that the terminal may set the multi-on identifier for the application multi-on group before displaying the application prompting information in the specific area in the interface of the terminal. For example, in a possible implementation, the terminal may randomly set the multi-on identifier for the application multi-on group when installing the plurality of applications of the application multi-on group. In another possible implementation, the terminal sets the multi-on identifier for the application multi-on group when running any application of the application multi-on group. There are no specific limits made to setting time of the multi-on identifier in the embodiments of the present invention.

It is also to be noted that there are the following three possible implementations for the terminal to set the multi-on identifier.

In the first possible implementation, when the terminal sets the multi-on identifier for the application multi-on group, the terminal randomly selects an identifier such as a number, a letter, a special character and a special symbol for the application multi-on group, and determines the randomly selected identifier as the multi-on identifier of the application multi-on group.

In the example, when the terminal randomly selects the identifier and determines the selected identifier as the multi-on identifier of the application multi-on group, the number of interactions with the user is reduced, and the efficiency of setting the multi-on identifier is improved.

In the second possible implementation, when the terminal sets the multi-on identifier for the application multi-on group, first setting prompting information is displayed. The first setting prompting information includes a plurality of identifiers and is configured to prompt the user to select an identifier from the plurality of identifiers. When a first setting instruction is received on the basis of the plurality of identifiers, an identifier selected according to the first setting instruction is determined as the multi-on identifier of the application multi-on group.

When the terminal determines the identifier selected according to the first setting instruction as the multi-on identifier of the application multi-on group, since the multi-on identifier is determined by the user, flexibility in setting of the multi-on identifier is improved, and accuracy of distinguishing the first application according to the multi-on identifier by the user is also improved.

It is to be noted that the terminal may display the first setting prompting information in the manner of popup display, window display and the like, which will not be specifically limited in the embodiments of the present invention.

It is also to be noted that the first setting instruction may be triggered when the user performs a preset operation.

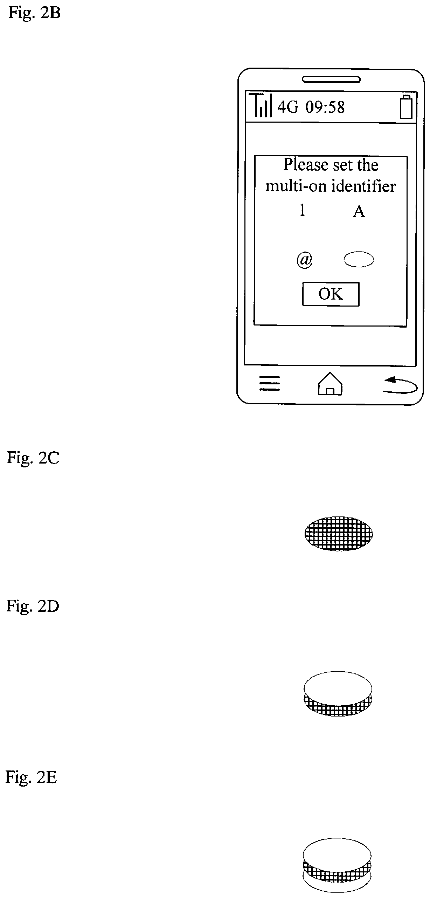

For example, when the terminal sets a multi-on identifier for the XX communication application multi-on group, first setting prompting information is displayed to prompt the user to select an identifier from four identifiers, a number 1, a letter A, a special symbol @, and an ellipse, as shown in Fig. 2B. When a first setting instruction is received on the basis of the plurality of identifiers and an identifier selected according to the first setting instruction is the ellipse, the ellipse is determined as the multi-on identifier of the XX communication application multi-on group.

In the third possible implementation, when the terminal sets the multi-on identifier for the application multi-on group, second setting prompting information is displayed. The second setting prompting information is configured to prompt the user to input an identifier. When the identifier input by the user is received on the basis of the second setting prompting information, the identifier input by the user is determined as the multi-on identifier of the application multi-on group.

In the example, when the terminal determines the identifier input by the user as the multi-on identifier of the application multi-on group, that is, the multi-on identifier may be customized by the user, so that the flexibility in setting of the multi-on identifier and the accuracy of distinguishing the first application according to the multi-on identifier by the user are further improved.

It is to be noted that the terminal displays the second setting prompting information in the manner of popup display, window display and the like, which will not be specifically limited in the embodiments of the present invention.

Furthermore, as can be seen from the above, the application multi-on group includes the plurality of identical applications including the original application and the at least one mirror application, and the first application may be specified by the user. Thus, the first application may be the original application. When a group of multi-on identifiers is set for the application multi-on group and the group of multi-on identifiers may include a plurality of multi-on identifiers, the plurality of multi-on identifiers may correspond to the plurality of identical applications of the application multi-on group, one to one.

In such a case, when each application of the application multi-on group may correspond to a multi-on identifier, the terminal may distinguish each of the applications of the application multi-on group on the basis of the plurality of multi-on identifiers, so that the display effect of displaying the plurality of identical applications of the application multi-on group is improved, thus enabling a user to easily and efficiently use the plurality of identical applications in the application multi-on group. And the accuracy of distinguishing the plurality of identical applications of the application multi-on group is further improved.

It is to be noted that the plurality of multi-on identifiers of the group of multi-on identifiers may be identifiers of the same type, and may also be identifiers of different types. For example, all of the plurality of multi-on identifiers may be numbers 1, 2, 3 and the like, and may also be of a plurality of types such as 1, A and @. There are no specific limits made in the embodiments of the present invention.

For example, the terminal sets a group of multi-on identifiers for the XX communication application multi-on group, including three multi-on identifiers. An XX communication application 1 corresponds to a multi-on identifier 1, as shown in Fig. 2C; an XX communication application 2 corresponds to a multi-on identifier 2, as shown in Fig. 2D; and an XX communication application 3 corresponds to a multi-on identifier 3, as shown in Fig. 2E.

In an example, when the terminal sets the group of multi-on identifiers for the application multi-on group, the plurality of multi-on identifiers of the group may not correspond to the applications of the application multi-on group one to one. That is, the number of the plurality of multi-on identifiers is greater than or equal to the number of the plurality of identical applications of the application multi-on group. When it is necessary to display the application prompting information in the specific area in the interface of the terminal, a multi-on identifier is randomly selected from the plurality of multi-on identifiers.

Furthermore, the operation that the terminal adds the multi-on identifier to the original icon of the first application to obtain the multi-on icon is implemented as follows: the terminal acquires the original icon of the first application before displaying the application prompting information in the specific area in the interface of the terminal, and adds the multi-on identifier of the application multi-on group at a specific position within the original icon to obtain the multi-on icon of the first application.

If the terminal sets the group of multi-on identifiers for the application multi-on group, the terminal acquires the original icon of the first application and the multi-on identifier corresponding to the first application and adds the multi-on identifier corresponding to the first application to the specific position of the original icon to obtain the multi-on icon of the first application.

It is to be noted that the specific position of the original icon may be the left lower corner of the original icon. Of course, the specific position of the original icon may also be another position of the original icon in a practical application. There are no specific limits made in the embodiments of the present invention.

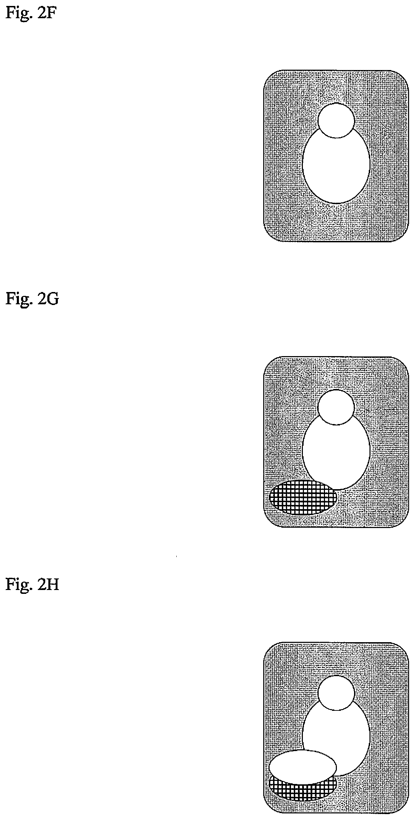

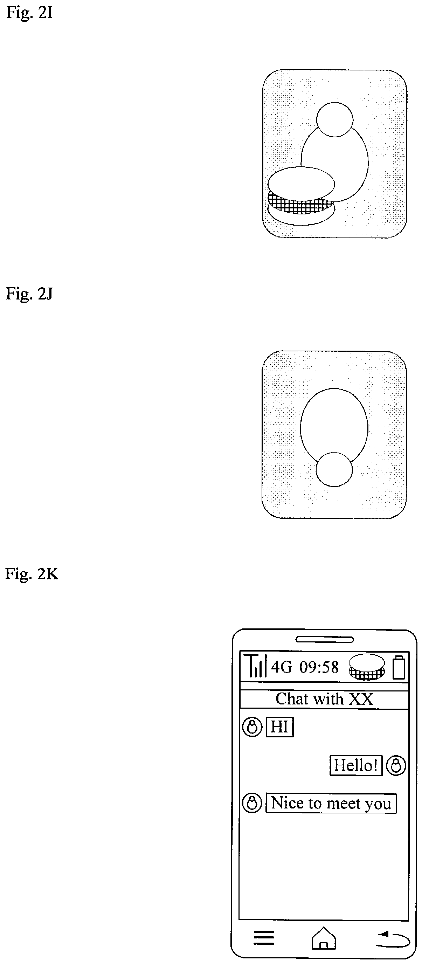

For example, in the XX communication application multi-on group, an XX communication application 1 is the original application, an original icon of the XX communication application 1 is shown in Fig. 2F, original icons of an XX communication application 2 and an XX communication application 3 are the same as the original icon of the XX communication application 1, the XX communication application 1 corresponds to a multi-on identifier 1, the XX communication application 2 corresponds to a multi-on identifier 2 and the XX communication application 3 corresponds to a multi-on identifier 3. Therefore, the multi-on identifier 1 may be added to the left lower corner of the original icon of the XX communication application 1 to obtain a multi-on icon 1 of the XX communication application 1, as shown in Fig. 2G; the multi-on identifier 2 is added to the left lower corner of the original icon of the XX communication application 2 to obtain a multi-on icon 2 of the XX communication application 2, as shown in Fig. 2H; and multi-on identifier 3 is added to the left lower corner of the original icon of the XX communication application 3 to obtain a multi-on icon 3 of the XX communication application 3, as shown in Fig. 2I.

In an example, the multi-on icon of the first application may also be obtained by modifying the original icon of the original application of the application multi-on group by the terminal, for example, by overturning the original icon, and there are no specific limits made in the embodiments of the present invention.

For example, the XX communication application multi-on group further includes an XX communication application 4 which is a mirror application and an XX communication application 1 which is the original application. The original icon of the XX communication application 1 is shown in Fig. 2F. Thus, the original icon of the XX communication application 1 is overturned, as shown in Fig. 2J, and the overturned icon is determined as a multi-on icon of the XX communication application 4.

In addition, when the original icons of the respective applications of the application multi-on group are different from each other, the application prompting information may further include the original icon of the first application.

Furthermore, the following three implementations may be adopted for displaying the application prompting information in the specific area in the interface of the terminal.

In the first implementation, whether the first application of the application multi-on group is in a foreground running status or not is judged. When the first application of the application multi-on group is in the foreground running status, the application prompting information is displayed in the system status bar of the terminal.

In such a case, when the first application is in the foreground running status, the interface for the terminal to run the first application has indicated that the currently running application is an application of the application multi-on group, so that the application prompting information may be a multi-on identifier to further indicate that the application currently in the foreground running status is the first application of the application multi-on group. The first application is accurately distinguished from the other applications of the application multi-on group.

It is to be noted that the multi-on icon of the first application may also be displayed in the system status bar of the terminal to prompt that applications run by the terminal include the first application of the application multi-on group, when the first application of the application multi-on group is not in the foreground running status.

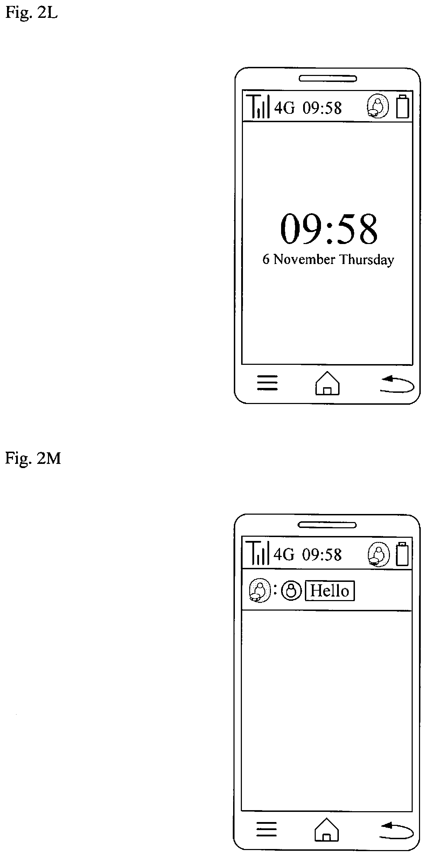

For example, when the first application is the XX communication application 2 and the XX communication application 2 is currently in the foreground running status, the multi-on identifier 2 of the XX communication application 2 is displayed in the system status bar (e.g. the bar which also displays the signal strength, the network, the current time, and the battery status, in Fig.2K) of the terminal, as shown in Fig. 2K. When the first application is the XX communication application 2 and the XX communication application 2 is not in the foreground running status currently, the multi-on icon 2 of the XX communication application 2 is displayed in the system status bar of the terminal, as shown in Fig. 2L.

In the second implementation, when a notification message sent for the first application is received, the notification message is displayed in the system notification bar of the terminal, and the multi-on icon of the first application is displayed at a position for displaying the notification message.

In such a case, for each of the plurality of identical applications of the application multi-on group, the terminal may receive a notification message for the application. Accordingly, when the terminal receives the notification message sent for the first application, the first application may not run at present. Thus, the notification message is displayed in the system notification bar of the terminal and the multi-on icon of the first application is displayed at the display position of the notification message, when the notification message sent for the first application is received, to prompt that the currently received notification message is sent for the first application and further run the first application to further distinguish the first application from the other applications of the application multi-on group.

It is to be noted that the notification message may be sent by a server corresponding to the application or sent by another terminal, which will not be specifically limited in the embodiments of the present invention.

For example, when the first application is the XX communication application 2 and the terminal receives a notification message "hello" sent for the XX communication application 2, the notification message "hello" is displayed in the notification bar (e.g. the one below the system status bar in Fig. 2M) of the terminal, and the multi-on icon of the XX communication application 2 is displayed at a position (for example in the notification bar) for displaying the notification message, as shown in Fig. 2M.

In the third implementation, an icon of the first application in the taskbar (not shown in the figures) of the terminal is set to be the multi-on icon. At least one icon, which includes icons of applications currently in a running status, is contained in the taskbar.

The system status bar of the terminal is limited in space, and thus there may not be sufficient space for displaying the application prompting information. In addition, the taskbar of the terminal may usually include at least one icon which includes the icons of the applications currently in the running status. Therefore, the icon of the first application in the taskbar may be set to be the multi-on icon to ensure that the first application may be distinguished from the other applications of the application multi-on group, namely to improve the accuracy of distinguishing the first application from the other applications of the application multi-on group.

It is to be noted that the terminal may also display the application prompting information in a specific area in the interface of the terminal in a practical implementation. For example, the icon of the first application in a desktop of the terminal is set to be the multi-on icon. There are no specific limits made in the embodiments of the present invention.

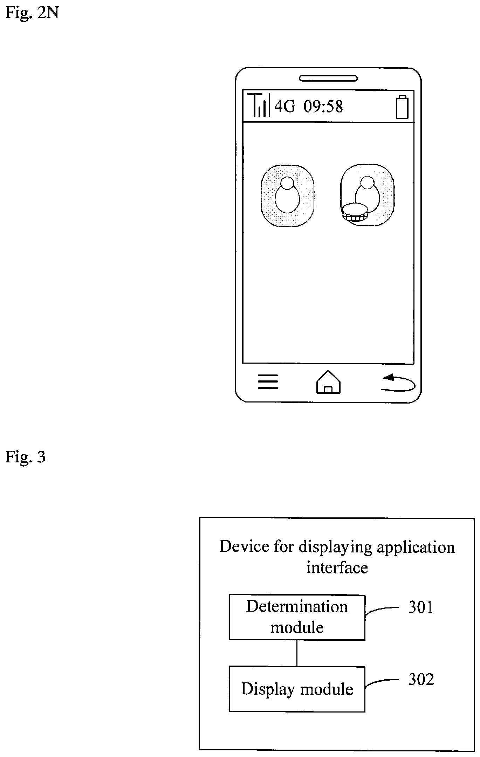

For example, as shown in Fig. 2N, two icons are included in the desktop of the terminal. One icon is the icon of the XX communication application 1 of the XX communication application multi-on group. The XX communication application 1 is the original application, and the icon is the original icon of the XX communication application 1. The other icon is the icon of the XX communication application 2 of the XX communication application multi-on group. The XX communication application 2 is the first application, and the other icon is the multi-on icon of the XX communication application 2.

Furthermore, as can seen from the above, for each application multi-on group of the plurality of application multi-on groups, the terminal determines the first application of which the operating time is closest to the current time. Thus, the terminal also displays the application prompting information in the specific area in the interface of the terminal for indicating the first application, of which the operating time is closest to the current time, of the application multi-on group after determining the first application, of which the operating time is closest to the current time, of each application multi-on group of the plurality of application multi-on groups.

In the embodiment of the present invention, the terminal may determine the first application, of which the operating time is closest to the current time, of the application multi-on group and display the application prompting information in the specific area in the interface of the terminal for indicating the first application of which the operating time is closest to the current time to further accurately distinguish the first application from other applications of the application multi-on group. In addition, the first application may be a mirror application, that is, the application prompting information is displayed for the mirror application of the application multi-on group to further more apparently distinguish the mirror application from the original application of the application multi-on group and further improve the accuracy of distinguishing the plurality of identical applications of the application multi-on group. In addition, the application prompting information includes the multi-on identifier or the multi-on icon of the application multi-on group, and when the first application is in the foreground running status, the multi-on identifier or the multi-on icon is displayed in the system status bar of the terminal, and when the application is not in the foreground running status, the multi-on icon is displayed in the system status bar of the terminal, so that flexibility in displaying the application prompting information is improved.

Fig. 3 is a block diagram of a device for displaying an application interface, according to an embodiment. Referring to Fig. 3, the device includes a determination module 301 and a display module 302.

The determination module 301 is configured to determine a first application, of which operating time is closest to current time, of an application multi-on group.

The display module 302 is configured to display application prompting information in a specific area in an interface of a terminal for indicating the first application of which the operating time is closest to the current time.

In another embodiment of the present invention, the application prompting information includes a multi-on identifier or a multi-on icon of the application multi-on group.

In another embodiment of the present invention, the display module includes a judgment module and a first display module.

The judgment module is configured to judge whether the first application of the application multi-on group is in a foreground running status or not.

The first display module is configured to display the application prompting information in a system status bar of the terminal when the first application of the application multi-on group is in the foreground running status.

In another embodiment of the present invention, the display module includes a second display module and a third display module.

The second display module is configured to display a notification message, which is sent for the first application, in a system notification bar of the terminal when the notification message is received.

The third display module is configured to display a multi-on icon of the first application at a position for displaying the notification message.

In another embodiment of the present invention, the display module includes a fourth display module.

The fourth display module configured to set an icon of the first application in a taskbar of the terminal to be the multi-on icon, wherein at least one icon, which includes icons of applications currently in a running status, is contained in the taskbar.

In another embodiment of the present invention, the device further includes an acquisition module and an addition module.

The acquisition module is configured to acquire an original icon of the first application.

The addition module is configured to add the multi-on icon of the application multi-on group at a specific position within the original icon to obtain the multi-on icon of the first application.

In another embodiment of the present invention not being part of this invention, the first application is a mirror application of the application multi-on group.

In the embodiment of the present invention, the terminal determines the first application, of which the operating time is closest to the current time, of the application multi-on group and display the application prompting information in the specific area in the interface of the terminal for indicating the first application of which the operating time is closest to the current time to further accurately distinguish the first application from other applications of the application multi-on group, so that the display effect of displaying a plurality of identical applications of the application multi-on group is improved.

With respect to the devices in the above embodiments, the specific manners that various modules perform operations have been described in detail in the embodiments regarding the methods, which will not be elaborated herein.

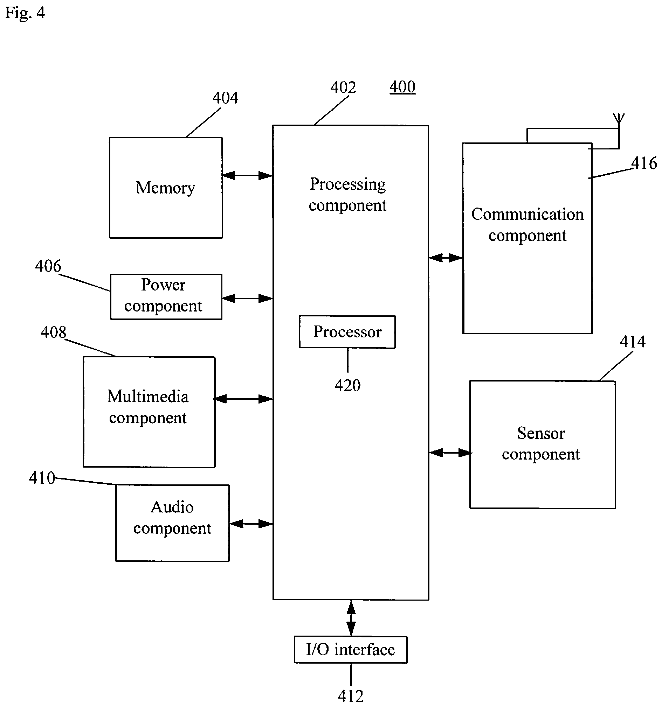

Fig. 4 is a block diagram illustrating a device for displaying an application interface 400 according to an embodiment. For example, the device 400 may be a mobile phone, a digital broadcast terminal, a messaging device, a gaming console, a tablet, a medical device, exercise equipment, a personal digital assistant or the like.

Referring to Fig. 4, the device 400 may include one or more of a processing component 402, a memory 404, a power component 406, a multimedia component 408, an audio component 410, an Input/Output (I/O) interface 412, a sensor component 414, and a communication component 416.

The processing component 402 typically controls overall operations of the device 400, such as the operations associated with display, telephone calls, data communications, camera operations, and recording operations. The processing component 402 may include one or more processors 420 for executing instructions to perform all or part of the steps in the abovementioned method. Moreover, the processing component 402 may include one or more modules which facilitate interaction between the processing component 402 and the other components. For instance, the processing component 402 may include a multimedia module to facilitate interaction between the multimedia component 408 and the processing component 402.

The memory 404 is configured to store various types of data to support the operation of the device 400. Examples of such data include instructions configured for any application programs or methods operated on the device 400, contact data, phonebook data, messages, pictures, video, etc. The memory 404 may be implemented by any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, and a magnetic or optical disk.

The power component 406 provides power for various components of the device 400. The power component 406 may include a power management system, one or more power supplies, and other components associated with the generation, management and distribution of power for the device 400.

The multimedia component 408 includes a screen providing an output interface between the device 400 and a user. In some embodiments not being part of this invention, the screen may include a Liquid Crystal Display (LCD) and a Touch Panel (TP). If the screen includes the TP, the screen may be implemented as a touch screen to receive an input signal from the user. The TP includes one or more touch sensors to sense touches, swipes and gestures on the TP. The touch sensors may not only sense a boundary of a touch or swipe action, but also sense a duration and pressure associated with the touch or swipe action. In some embodiments, the multimedia component 408 includes a front camera and/or a rear camera. The front camera and/or the rear camera may receive external multimedia data when the device 400 is in an operation mode, such as a photographing mode or a video mode. Each of the front camera and the rear camera may be a fixed optical lens system or have capabilities of focusing and optical zooming.

The audio component 410 is configured to output and/or input an audio signal. For example, the audio component 410 includes a Microphone (MIC) which is configured to receive an external audio signal when the device 400 is in the operation mode, such as a call mode, a recording mode and a voice recognition mode. The received audio signal may be further stored in the memory 404 or sent through the communication component 416. In some embodiments, the audio component 410 further includes a speaker configured to output the audio signal.

The I/O interface 412 provides an interface between the processing component 402 and a peripheral interface module which may be a keyboard, a click wheel, a button or the like. The button may include, but not limited to, a home button, a volume button, a starting button and a locking button.

The sensor component 414 includes one or more sensors configured to provide status assessment in various aspects for the device 400. For instance, the sensor component 414 may detect an on/off status of the device 400 and relative positioning of components, such as a display and small keyboard of the device 400, and the sensor component 414 may further detect a change in a position of the device 400 or a component of the device 400, presence or absence of contact between the user and the device 400, orientation or acceleration/deceleration of the device 400 and a change in temperature of the device 400. The sensor component 414 may include a proximity sensor configured to detect presence of an object nearby without any physical contact. The sensor component 414 may also include a optical sensor, such as a Complementary Metal Oxide Semiconductor (CMOS) or Charge Coupled Device (CCD) image sensor, configured for use in an imaging application. In some embodiments, the sensor component 414 may also include an acceleration sensor, a gyroscope sensor, a magnetic sensor, a pressure sensor or a temperature sensor.

The communication component 416 is configured to facilitate wired or wireless communication between the device 400 and another device. The device 400 may access a communication-standard-based wireless network, such as a Wireless Fidelity (WiFi) network, a 2nd-Generation (2G) or 3rd-Generation (3G) network or a combination thereof. In an exemplary embodiment, the communication component 416 receives a broadcast signal or broadcast associated information from an external broadcast management system through a broadcast channel. In an exemplary embodiment, the communication component 416 further includes a Near Field Communication (NFC) module to facilitate short-range communication. For example, the NFC module may be implemented on the basis of a Radio Frequency Identification (RFID) technology, an Infrared Data Association (IrDA) technology, an Ultra-WideBand (UWB) technology, a BlueTooth (BT) technology and another technology.

In an exemplary embodiment, the device 400 may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components which are configured to perform the abovementioned method.

In an exemplary embodiment, there is also provided a non-transitory computer-readable storage medium including instructions, such as the memory 404 containing instructions which may be executed by the processor 420 of the device 400 to implement the abovementioned method. For example, the non-transitory computer-readable storage medium may be a ROM, a Compact Disc Read-Only Memory (CD-ROM), a magnetic tape, a floppy disc, an optical data storage device or the like.

According to a non-transitory computer-readable storage medium, when the instructions in the storage medium are executed by a processor of a terminal, the terminal performs a method for displaying an application interface, the method including that:
a first application, of which operating time is closest to current time, of an application multi-on group is determined; and
application prompting information is displayed in a specific area in an interface of the terminal for indicating the first application of which the operating time is closest to the current time.

In another embodiment of the present invention, the application prompting information includes a multi-on identifier or a multi-on icon of the application multi-on group.

In another embodiment of the present invention the step that the application prompting information is displayed in the specific area in the interface of the terminal includes:
whether the first application of the application multi-on group is in a foreground running status or not is judged; and
the application prompting information is displayed in a system status bar of the terminal when the first application of the application multi-on group is in the foreground running status.

In another embodiment of the present invention, the step that the application prompting information is displayed in the specific area in the interface of the terminal includes:
a notification message sent for the first application is displayed in a system notification bar of the terminal when the notification message is received; and
a multi-on icon of the first application is displayed at a position for displaying the notification message.

In another embodiment of the present invention, the step that the application prompting information is displayed in the specific area in the interface of the terminal includes:
an icon of the first application in a taskbar of the terminal is set to be the multi-on icon, at least one icon being contained in the taskbar and the at least one icon being icons of applications currently in a running status.

In another embodiment of the present invention, before the step that the application prompting information is displayed in the specific area in the interface of the terminal, the method further includes:
an original icon of the first application is acquired; and
the multi-on identifier of the application multi-on group is added at a specific position within the original icon to obtain the multi-on icon of the first application.

In another embodiment of the present invention, the first application is a mirror application of the application multi-on group.

In the embodiment of the present invention, the terminal may determine the first application, of which the operating time is closest to the current time, of the application multi-on group and display the application prompting information in the specific area in the interface of the terminal for indicating the first application of which the operating time is closest to the current time to further accurately distinguish the first application from other applications of the application multi-on group, so that the display effect of displaying a plurality of identical applications of the application multi-on group is improved.

Other embodiments of the present invention will be conceived by those skilled in the art from consideration of the specification and practice of the present invention. This application is intended to cover any variations, uses, or adaptations of the embodiments of the present invention following the general principles the embodiments of the present invention and including common knowledge or conventional technical means in the art which is/are not disclosed in the embodiments of the present invention. It is intended that the specification and embodiments are considered as exemplary only, with the scope of the present invention being defined by the appended claims.

## Claims

1. A method for displaying an application interface, comprising:
determining (101) a first application, of which operating time is closest to current time, of an application multi-on group, said multi-on group being a group of identical applications all installed on a terminal, said applications being runnable at the same time, and having a same display interface, wherein the identical applications are an original application and at least one mirror application, and the first application is one of the at least one mirror application; and
displaying (102) application prompting information in a specific area in an interface of a terminal for indicating the first application of which the operating time is closest to the current time,
wherein the application prompting information comprises a multi-on icon of the application multi-on group, said multi-on icon being a multi-on icon of the first application, and obtained by modifying an original icon of the original application of said multi-on group,
before displaying (102) the application prompting information in the specific area in the interface of the terminal, further comprising:
acquiring an original icon of the first application; and
adding a multi-on identifier of the first application at a specific position within the original icon to obtain the multi-on icon of the first application, so as to distinguish the first application from at least one other application of the application multi-on group,
wherein the applications in said multi-on group have a same original icon,
wherein displaying (102) the application prompting information in the specific area in the interface of the terminal comprises:
displaying a notification message, which is sent for the first application, in a system notification bar of the terminal, when the notification message is received; and
displaying the multi-on icon of the first application at a position where the notification message is displayed.

2. The method according to claim 1, wherein displaying (102) the application prompting information in the specific area in the interface of the terminal comprises:
judging whether the first application of the application multi-on group is in a foreground running status or not; and
displaying the application prompting information in a system status bar of the terminal when the first application of the application multi-on group is in the foreground running status.

3. The method according to any one of claims 1 to 2, wherein displaying (102) the application prompting information in the specific area in the interface of the terminal comprises:
displaying the multi-on icon of the first application in a taskbar of the terminal, the taskbar including one or more icons of applications currently in a running status.

4. A device for displaying an application interface, comprising:
a determination module (301) configured to determine a first application, of which operating time is closest to current time, of an application multi-on group, said multi-on group being a group of identical applications all installed on a terminal, said applications being runnable at the same time, and having a same display interface, wherein the identical applications are an original application and at least one mirror application, and the first application is one of the at least one mirror application; and
a display module (302) configured to display application prompting information in a specific area in an interface of a terminal for indicating the first application of which the operating time is closest to the current time,
wherein the application prompting information comprises a multi-on icon of the application multi-on group, said multi-on icon being a multi-on icon of the first application, and obtained by modifying an original icon of the original application of said multi-on group,
wherein the device further comprises:
an acquisition module configured to acquire an original icon of the first application; and
an addition module configured to add a multi-on identifier of the first application at a specific position within the original icon to obtain the multi-on icon of the first application, so as to distinguish the first application from at least one other application of the application multi-on group,
wherein the applications in said multi-on group have a same original icon,
wherein the display module (302) comprises:
a second display module configured to display a notification message, which is sent for the first application, in a system notification bar of the terminal, when the notification message is received; and
a third display module configured to display the multi-on icon of the first application at a position where the notification message is displayed.

5. The device according to claim 4, wherein the display module (302) comprises:
a judgment module configured to judge whether the first application of the application multi-on group is in a foreground running status or not; and
a first display module configured to display the application prompting information in a system status bar of the terminal when the first application of the application multi-on group is in the foreground running status.

6. The device according to any one of claims 4 to 5, wherein the display module (302) comprises:
a fourth display module configured to display the multi-on icon of the first application in a taskbar of the terminal, the taskbar including one or more icons of applications currently in a running status.

7. A computer program including instructions for executing the steps of a method for displaying an application interface according to any one of claims 1 to 3 when said program is executed by a computer.

8. A recording medium readable by a computer and having recorded thereon a computer program including instructions for executing the steps of a method for displaying an application interface according to any one of claims 1 to 3.

## Patentansprüche

1. Verfahren zum Anzeigen einer Anwendungsschnittstelle, umfassend:
Bestimmen (101) einer ersten Anwendung, deren Betriebszeit der aktuellen Zeit am nächsten ist, aus einer Anwendungs-Multi-On-Gruppe, wobei die Multi-On-Gruppe eine Gruppe identischer Anwendungen ist, die alle auf einem Endgerät installiert sind, wobei die Anwendungen gleichzeitig lauffähig sind und eine gleiche Anzeigeschnittstelle aufweisen, wobei die identischen Anwendungen eine Originalanwendung und mindestens eine Spiegelanwendung sind und die erste Anwendung eine der mindestens einen Spiegelanwendung ist; und
Anzeigen (102) von Anwendungsaufforderungsinformationen in einem spezifischen Bereich in einer Schnittstelle eines Endgeräts, um die erste Anwendung anzugeben, deren Betriebszeit der aktuellen Zeit am nächsten ist,
wobei die Anwendungsaufforderungsinformationen ein Multi-On-Symbol der Anwendungs-Multi-On-Gruppe umfasst, wobei das Multi-On-Symbol ein Multi-On-Symbol der ersten Anwendung ist und durch Modifizieren eines Originalsymbols der Originalanwendung der Multi-On-Gruppe erlangt wird,
vor Anzeigen (102) der Anwendungsaufforderungsinformationen in dem spezifischen Bereich in der Schnittstelle des Endgeräts, ferner umfassend:
Erfassen eines Originalsymbols der ersten Anwendung, und
Hinzufügen einer Multi-On-Kennung der ersten Anwendung an einer spezifischen Position innerhalb des Originalsymbols, um das Multi-On-Symbol der ersten Anwendung zu erlangen, um so die erste Anwendung von mindestens einer anderen Anwendung der Anwendungs-Multi-On-Gruppe zu unterscheiden,
wobei die Anwendungen in der Multi-on-Gruppe ein gleiches Originalsymbol aufweisen,
wobei ein Anzeigen (102) der Anwendungsaufforderungsinformationen in dem spezifischen Bereich in der Schnittstelle des Endgeräts Folgendes umfasst:
Anzeigen einer Benachrichtigungsmeldung, die für die erste Anwendung gesendet wird, in einer Systembenachrichtigungsleiste des Endgeräts, wenn die Benachrichtigungsmeldung empfangen wird,
und
Anzeigen des Multi-on-Symbols der ersten Anwendung an einer Position, an der die Benachrichtigungsmeldung angezeigt wird.

2. Verfahren nach Anspruch 1, wobei ein Anzeigen (102) der Anwendungsaufforderungsinformationen in dem spezifischen Bereich auf der Schnittstelle des Endgeräts Folgendes umfasst:
Beurteilen, ob die erste Anwendung der Anwendungsmehrfachgruppe in einem Vordergrundlaufstatus ist; und
Anzeigen der Anwendungsaufforderungsinformationen in einer Systemstatusleiste des Endgeräts, wenn die erste Anwendung der Anwendungsmehrfachgruppe in einem Vordergrundlaufstatus ist.

3. Verfahren nach einem der Ansprüche 1 bis 2, wobei ein Anzeigen (102) der Anwendungsaufforderungsinformationen in dem spezifischen Bereich auf der Schnittstelle des Endgeräts Folgendes umfasst:
Anzeigen des Multi-on-Symbols der ersten Anwendung in einer Taskleiste des Endgeräts, wobei die Taskleiste ein oder mehrere Symbole von Anwendungen beinhaltet, die aktuell in einem laufenden Status sind.

4. Vorrichtung zum Anzeigen einer Anwendungsschnittstelle, umfassend:
ein Bestimmungsmodul (301), das konfiguriert ist, um eine erste Anwendung, deren Betriebszeit der aktuellen Zeit am nächsten kommt, einer Anwendungs-Multi-On-Gruppe zu bestimmen, wobei die Multi-On-Gruppe eine Gruppe identischer Anwendungen ist, die alle auf einem Endgerät installiert sind, wobei die Anwendungen gleichzeitig lauffähig sind und eine gleiche Anzeigeschnittstelle aufweisen, wobei die identischen Anwendungen eine Originalanwendung und mindestens eine Spiegelanwendung sind und die erste Anwendung eine der mindestens einen Spiegelanwendung ist; und
ein Anzeigemodul (302), das konfiguriert ist, um Anwendungsaufforderungsinformationen in einem spezifischen Bereich in einer Schnittstelle eines Endgeräts anzuzeigen, um die erste Anwendung anzuzeigen, deren Betriebszeit der aktuellen Zeit am nächsten ist,
wobei die Anwendungsaufforderungsinformationen ein Multi-On-Symbol der Anwendungs-Multi-On-Gruppe umfasst, wobei das Multi-On-Symbol ein Multi-On-Symbol der ersten Anwendung ist und durch Modifizieren eines Originalsymbols der Originalanwendung der Multi-On-Gruppe erlangt wird,
wobei die Vorrichtung ferner Folgendes umfasst:
ein Erfassungsmodul, das konfiguriert ist, dass es ein Originalsymbol der ersten Anwendung zu erfassen; und
ein Additionsmodul, das konfiguriert ist, um der ersten Anwendung eine Multi-On-Kennung an einer bestimmten Position innerhalb des Originalsymbols hinzuzufügen, um das Multi-On-Symbol der ersten Anwendung zu erlangen, um so die erste Anwendung von mindestens einer anderen Anwendung der Anwendungs-Multi-On-Gruppe zu unterscheiden,
wobei die Anwendungen in der Multi-on-Gruppe ein gleiches Originalsymbol aufweisen, wobei das Anzeigemodul (302) Folgendes umfasst:
ein zweites Anzeigemodul, das konfiguriert ist, um eine Benachrichtigungsmeldung, die für die erste Anwendung gesendet wird, in einer Systembenachrichtigungsleiste des Endgeräts anzuzeigen, wenn die Benachrichtigungsmeldung empfangen wird, und
ein drittes Anzeigemodul, das konfiguriert ist, um das Multi-on-Symbol der ersten Anwendung an einer Position anzuzeigen, an der die Benachrichtigungsmeldung angezeigt wird.

5. Vorrichtung nach Anspruch 4, wobei das Anzeigemodul (302) Folgendes umfasst:
ein Beurteilungsmodul, das konfiguriert ist, um zu beurteilen, ob die erste Anwendung der Anwendungsmehrfachgruppe in einem Vordergrundlaufstatus ist;
und
ein erstes Anzeigemodul, das konfiguriert ist, um die Anwendungsaufforderungsinformationen in einer Systemstatusleiste des Endgeräts anzuzeigen, wenn die erste Anwendung der Anwendungsmehrfachgruppe in einem Vordergrundlaufstatus ist.

6. Vorrichtung nach einem der Ansprüche 4 bis 5, wobei das Anzeigemodul (302) Folgendes umfasst:
ein viertes Anzeigemodul, das konfiguriert ist, um das Multi-on-Symbol der ersten Anwendung in einer Taskleiste des Endgeräts anzuzeigen, wobei die Taskleiste ein oder mehrere Symbole von Anwendungen beinhaltet, die aktuell in einem Laufstatus sind.

7. Computerprogramm, das Anweisungen zum Ausführen der Schritte eines Verfahrens zum Anzeigen einer Anwendungsschnittstelle nach einem der Ansprüche 1 bis 3 beinhaltet, wenn das Programm von einem Computer ausgeführt wird.

8. Aufzeichnungsmedium, das von einem Computer lesbar ist und auf dem ein Computerprogramm aufgezeichnet ist, das Anweisungen zum Ausführen der Schritte eines Verfahrens zum Anzeigen einer Anwendungsschnittstelle nach einem der Ansprüche 1 bis 3 beinhaltet.

## Revendications

1. Procédé d'affichage d'une interface d'application, comprenant les étapes ci-dessous consistant à :
déterminer (101) une première application, dont une heure de fonctionnement est la plus proche de l'heure en cours, d'un groupe « multi-instance » d'applications, ledit groupe « multi-instance » étant un groupe d'applications identiques toutes installées sur un terminal, lesdites applications pouvant être exécutées en même temps, et présentant une même interface d'affichage, dans lesquelles les applications identiques sont une application d'origine et au moins une application miroir, et dans laquelle la première application est l'une de ladite au moins une application miroir ; et
afficher (102) des informations d'invite d'application dans une zone spécifique d'une interface d'un terminal pour indiquer la première application dont l'heure de fonctionnement est la plus proche de l'heure en cours ;
dans lesquelles les informations d'invite d'application comprennent une icône « multi-instance » du groupe « multi-instance » d'applications, ladite icône « multi-instance » étant une icône « multi-instance » de la première application, et étant obtenue en modifiant une icône d'origine de l'application d'origine dudit groupe « multi-instance » ;
avant l'étape d'affichage (102) des informations d'invite d'application dans la zone spécifique de l'interface du terminal, le procédé comprenant en outre les étapes ci-dessous consistant à :
acquérir une icône d'origine de la première application ; et
ajouter un identificateur « multi-instance » de la première application à une position spécifique dans l'icône d'origine en vue d'obtenir l'icône « multi-instance » de la première application, de manière à distinguer la première application d'au moins une autre application du groupe « multi-instance » d'applications ;
dans lesquelles les applications dans ledit groupe « multi-instance » présentent une même icône d'origine ;
dans laquelle l'étape d'affichage (102) des informations d'invite d'application dans la zone spécifique de l'interface du terminal comprend les étapes ci-dessous consistant à :
afficher un message de notification, qui est envoyé pour la première application, dans une barre de notification système du terminal, lorsque le message de notification est reçu ; et
afficher l'icône « multi-instance » de la première application à une position où le message de notification est affiché.

2. Procédé selon la revendication 1, dans lequel l'étape d'affichage (102) des informations d'invite d'application dans la zone spécifique de l'interface du terminal comprend les étapes ci-dessous consistant à :
juger si la première application du groupe « multi-instance » d'applications est dans un état d'exécution en avant-plan ou non ; et
afficher les informations d'invite d'application dans une barre d'état système du terminal lorsque la première application du groupe « multi-instance » d'applications est dans l'état d'exécution en avant-plan.

3. Procédé selon l'une quelconque des revendications 1 à 2, dans lequel l'étape d'affichage (102) des informations d'invite d'application dans la zone spécifique de l'interface du terminal comprend l'étape ci-dessous consistant à
afficher l'icône « multi-instance » de la première application dans la barre des tâches du terminal, la barre des tâches incluant une ou plusieurs icônes d'applications actuellement dans un état d'exécution.

4. Dispositif destiné à afficher une interface d'application, comprenant :
un module de détermination (301) configuré de manière à déterminer une première application, dont l'heure de fonctionnement est la plus proche de l'heure en cours, d'un groupe « multi-instance » d'applications, ledit groupe « multi-instance » étant un groupe d'applications identiques toutes installées sur un terminal, lesdites applications pouvant être exécutées en même temps et présentant une même interface d'affichage, dans lesquelles les applications identiques sont une application d'origine et au moins une application miroir, et dans laquelle la première application est l'une de ladite au moins une application miroir ; et
un module d'affichage (302) configuré de manière à afficher des informations d'invite d'application dans une zone spécifique de l'interface d'un terminal, afin d'indiquer la première application dont l'heure de fonctionnement est la plus proche de l'heure en cours ;
dans lesquelles les informations d'invite d'application comprennent une icône « multi-instance » du groupe « multi-instance » d'applications, ladite icône « multi-instance » étant une icône « multi-instance » de la première application, et étant obtenue en modifiant une icône d'origine de l'application d'origine dudit groupe « multi-instance » ;
dans lequel le dispositif comprend en outre :
un module d'acquisition configuré de manière à acquérir une icône d'origine de la première application ; et
un module d'ajout configuré de manière à ajouter un identificateur « multi-instance » de la première application à une position spécifique dans l'icône d'origine, en vue d'obtenir l'icône « multi-instance » de la première application, de manière à distinguer la première application d'au moins une autre application du groupe « multi-instance » d'applications ;
dans lesquelles les applications dans ledit groupe « multi-instance » présentent une même icône d'origine ;
dans lequel le module d'affichage (302) comprend :
un deuxième module d'affichage configuré de manière à afficher un message de notification, qui est envoyé pour la première application, dans une barre de notification système du terminal, lorsque le message de notification est reçu ; et
un troisième module d'affichage configuré de manière à afficher l'icône « multi-instance » de la première application à une position où le message de notification est affiché.

5. Dispositif selon la revendication 4, dans lequel le module d'affichage (302) comprend :
un module de jugement configuré de manière à juger si la première application du groupe « multi-instance » d'applications est dans un état d'exécution en avant-plan ou non ; et
un premier module d'affichage configuré de manière à afficher les informations d'invite d'application dans une barre d'état système du terminal lorsque la première application du groupe « multi-instance » d'applications est dans l'état d'exécution en avant-plan.

6. Dispositif selon l'une quelconque des revendications 4 à 5, dans lequel le module d'affichage (302) comprend :
un quatrième module d'affichage configuré de manière à afficher l'icône « multi-instance » de la première application dans une barre des tâches du terminal, la barre des tâches incluant une ou plusieurs icônes d'applications actuellement dans un état d'exécution.

7. Programme informatique incluant des instructions permettant d'exécuter les étapes d'un procédé d'affichage d'une interface d'application selon l'une quelconque des revendications 1 à 3, lorsque ledit programme est exécuté par un ordinateur.

8. Support d'enregistrement lisible par un ordinateur, sur lequel est enregistré un programme informatique incluant des instructions permettant d'exécuter les étapes d'un procédé d'affichage d'une interface d'application selon l'une quelconque des revendications 1 à 3.
